# EUROPÄISCHE PATENTSCHRIFT

(11) **EP 1 762 414 B1**
(45) Veröffentlichungstag und Bekanntmachung des Hinweises auf die Patenterteilung: **17.11.2010**
(21) Anmeldenummer: 06015644.5
(22) Anmeldetag: 27.07.2006
(51) Int. Cl.: B60J 7/185, B60J 7/14

(54) **Dach für Fahrzeuge mit offenem Aufbau**
Roof for cabriolet
Toit pour cabriolet

(30) Priorität: 12.09.2005 DE 102005043508
(43) Veröffentlichungstag der Anmeldung: 14.03.2007
(73) Patentinhaber: Magna Car Top Systems GmbH, 74321 Bietigheim-Bissingen (DE)
(72) Erfinder: Netzel, Peter, 20537 Hamburg (DE); Neuberger, Michael, 74613 Öhringen (DE)

(56) Entgegenhaltungen:
- DE-A1- 10 039 683
- DE-A1- 10 225 630
- DE-A1- 10 320 171
- DE-A1-102004 033 870
- FR-A- 2 859 413

## Beschreibung

Die Erfindung betrifft ein Dach für Fahrzeuge mit offenem Aufbau gemäß dem Oberbegriff des Anspruches 1.

Dächer der vorgenannten Art sind aus der EP 0 884 208 A1 bekannt, bei der über Lenkerkinematiken geführte formsteife Dachteile des mehrteiligen, als Hardtop ausgebildeten Daches in der Schließstellung untereinander über den Dachteilen zugeordnete Verriegelungsteile von Verriegelungsvorrichtungen gegeneinander lagegesichert sind und bei der Verriegelungsteile der Verriegelungsvorrichtungen auch zur Verriegelung des vorderen Dachteiles in dessen Ablagestellung gegenüber der Karosserie genutzt sind.

Aus der DE 195 074 31 Cl ist es des Weiteren für ein Hardtop-Fahrzeug mit zwei Dachteilen bekannt, das in der Schließstellung des Daches über eine Verriegelungsvorrichtung gegen den Windlauf des Fahrzeuges festgelegte vordere Dachteil auch in seiner Ablagestellung unter Nutzung von Teilen dieser Verriegelungsvorrichtung zu fixieren, in der die dachteilseitigen Verriegelungsteile mit im Ablagebereich vorgesehenen karosserieseitigen Verriegelungsteilen in Eingriff kommen.

Des Weiteren ist es aus der FR 2 791 007 bekannt, bei einem zweiteiligen Hardtop die Dachteile untereinander sowie gegenüber der Karosserie über eine Verriegelungsvorrichtung in ihrer Lage zu sichern und es werden auch hier Verriegelungsteile dieser Verriegelungsvorrichtung genutzt, um die Dachteile in ihrer Öffnungslage gegenüber der Karosserie abzustützen.

Aus der gattungsgemäßen DE 102 25 630 A1 ist ein Dach für Fahrzeuge offenen Aufbaus mit zwei Dachteilen bekannt, die über eine Lenkerkinematik getragen und karosserieseitig abgestützt sind. Aus ihrer den Fahrzeuginnenraum überdeckenden Schließstellung sind die Dachteile über die Lenkerkinematiken in ihre Offenstellung verschwenkbar, in der die Dachteile in einem heckseitigen Ablageraum liegen und das vordere Dachteil unter Beibehalt seiner Ausrichtung nach hinten verschwenkt das in seine Rückenlage verschwenkte hintere Dachteil überdeckt. In der Offenstellung sind die Dachteile über die karosserieseitig gelagerte Lenkerkinematik zur Karosserie über eine Verriegelungsvorrichtung festgelegt, deren eines Verriegelungsteil von einer am vorderen Ende des vorderen Dachteils angeordneten Verriegelungsaufnahme gebildet ist, in die ein karosserieseitig längsverschieblich abgestütztes, dornartiges Verriegelungsteil in der Verriegelungsstellung eingreift. Das dornartige Verriegelungsteil wird über eine vom Antrieb für die Lenkerkinematik abgezweigt angetriebene, karosserieseitig gelagerte Gestängeverbindung verstellt und bei Erreichen der der Offenstellung der Dachteile entsprechenden Ablagestellung in die Verriegelungsaufnahme eingeschoben.

Bei einem aus der DE 100 39 683 A1 bekannten, dreiteiligen Hardtop für Fahrzeuge sind die Dachteile verschwenkbar mit der Karosserie verbunden und aus ihrer Schließlage, in der sie den Fahrzeuginnenraum überdecken, in eine Offen- und Ablagestellung verschwenkbar. In dieser sind die Dachteile in einem heckseitigen, von einem karosserieseitigen Deckelteil zu überdeckenden Ablageraum zu einem Dachteilpaket mit in Rückenlage geschichtet übereinander liegenden Dachteilen zusammengefahren, wobei im Dachteilpaket das mittlere Dachteil zwischen dem vorderen oberen und dem unteren hinteren Dachteil liegt. In der Ablagestellung ist das Dachteilpaket zur Karosserie verriegelt. Die Verriegelung umfasst dachseitig ein am vorderen Ende des vorderen Dachteiles liegendes Verriegelungsteil, das in der Ablagestellung das im Dachteilpaket in Rückenlage oben liegende, vordere Dachteil gegen einen Querholm des Deckelteiles verriegelt.

Aus der FR 2 859 413 A ist ein weiteres dreiteiliges Hardtopdach bekannt. Bei diesem sind die Dachteile kulissengeführt aus ihrer den Fahrzeuginnenraum überspannenden Schließstellung in eine in die Karosserie abgesenkte Ablage- und Öffnungsstellung verfahrbar, in der sie unter Beibehalt ihrer in der Schließstellung gegebenen Ausrichtung mit oben liegender Dachhaut zu einem Dachteilpaket zusammengefahren sind. In diesem Dachteilpaket bildet das hintere Dachteil das untere und das vordere Dachteil, bei dazwischen liegendem, mittleren Dachteil, das obere Dachteil. In der Ablage- und Öffnungsstellung sind das vordere und das mittlere Dachteil über in Längsrichtung dieser Dachteile verlaufende und in ihrer Länge verstellbare Riegelstangen vorne und hinten in karosserieseitigen Aufnahmen verankert.

Der Erfindung liegt die Aufgabe zugrunde, für ein aus mehreren formsteifen Dachteilen bestehendes Dach der eingangs genannten Art mit über Lenkerkinematiken verbundenen Dachteilen die Lage der Dachteile zueinander nach deren Überführung in eine Paketstellung unabhängig von der Führung über die Lenkerkinematiken zu gewährleisten.

Erreicht wird dies mit den Merkmalen des Anspruches 1, die für die Offenstellung des Daches mit einander überdeckenden, übereinander gestapelten Dachteilen (Paketstellung) eine Verspannung der Dachteile gegeneinander über den Dachteilen zugeordnete Verriegelungsteile vorsehen, so dass die Funktion der Lenkerkinematiken in der Offenstellung der Dachteile im wesentlichen auf eine Tragfunktion beschränkt ist, da die Lage der Dachteile zueinander durch deren wechselseitige Verriegelung festgelegt ist.

Die die Dachteile tragenden Lenkerkinematiken, die bevorzugt als Viergelenkkinematiken, insbesondere in Form von Lenkerparallelogrammen ausgebildet sind, und die zwischen aufeinander folgenden Dachteilen vorgesehenen Verriegelungsteile verbinden die in der Schließlage des Daches aufeinander folgenden und in der Öffnungslage des Daches übereinander liegenden Dachteile in deren jeweils vorderem Endbereich.

Insbesondere ist eine solche Ausgestaltung in Verbindung mit Dächern zweckmäßig, deren Dachteile flächig eben, im wesentlichen plan ausgebildet sind, so dass eine sehr dichte Schichtung der Dachteile möglich ist, was bei über Lenkerkinematiken jeweils miteinander verbundenen und verstellbaren Dachteilen entsprechend ausladende Lenkerkinematiken bedingt. Vor allem gilt dies bei großflächigen Dächern, die sich ausgehend vom Windlauf des Fahrzeuges praktisch über die ganze Länge des Fahrzeuges erstrecken und die an ihrem bezogen auf die Fahrtrichtung des Fahrzeuges rückwärtigen Ende an die Hecktür oder Heckklappe anschließen, so dass sich ausgehend von der Oberkante der Hecktür oder Heckklappe bei geöffnetem Dach ein durch den Windlauf als Steg nach vorne begrenzter, U-förmiger Dachausschnitt ergibt.

Die zwischen den Dachteilen wirksamen Verriegelungen arbeiten bevorzugt mit Drehfallen oder Rasthaken, die beim Zusammenfahren der Dachteile in deren Stapellage selbsttätig in ihre Verriegelungsstellung eingeschwenkt und gegebenenfalls über Sperrklinken oder Verriegelungshaken gesichert werden.

Im Hinblick auf die Möglichkeit, die Sicherungen zur Freigabe der Dachteile beim Schließen des Daches gemeinsam zu öffnen, erweist es sich als zweckmäßig, wenn die Sperrklinken beziehungsweise Verriegelungshaken bevorzugt zusammen mit der Drehfalle einem Dachteil zugeordnet werden, bei einem Dach mit drei Dachteilen bevorzugt dem mittleren Dachteil, um diese Teile der Verriegelung gegebenenfalls zu einem Modul zusammenzufassen, das als vorgefertigte Einheit am entsprechenden Dachteil, also am mittleren Dachteil festgelegt wird und eine gemeinsame Betätigung ermöglicht.

Von besonderem Vorteil ist die erfindungsgemäße Verriegelung der Dachteile bei Dächern, bei denen die Dachteile bei der Öffnung des Daches zunächst in eine heckseitig zum Fahrzeug überlagerte Stapellage verfahren werden und dann, im Stapel, in eine Ablagestellung verbracht werden, in der sie in einer Überkopflage im heckseitigen Bodenbereich des Fahrzeuges angeordnet sind oder gegebenenfalls auch in einer zum Boden beabstandeten Lage, bevorzugt in Höhe der Gürtellinie des Fahrzeuges, wodurch sich günstige Ablagemöglichkeiten realisieren lassen, ungeachtet der Tatsache, dass der heckseitige Raum des Fahrzeuges bei geschlossenem Dach insgesamt als Ablageraum, oder für sonstige Zwecke zur Verfügung steht.

Zur Überführung des Dachteilpaketes in die Überkopflage ist im Rahmen der Erfindung bevorzugt eine Rotationslenkeranordnung vorgesehen, über die das Dachteilpaket um eine karosserieseitige Schwenkachse verschwenkbar ist. Diese Schwenkachse ist bevorzugt zur Karosserie lagefest, kann im Rahmen der Erfindung aber auch einer verstellbaren Konsole zugeordnet sein, so dass sich bei Höhenverstellung der Konsole auch mit kurzen Lenkerarmen der Rotationslenkeranordnung große Höhenunterschiede zwischen der Dachebene und der Ablageebene für das in Überkopflage verschwenkte Dachteilpaket realisieren lassen.

Die Anbindung des Daches zur Rotationslenkeranordnung erfolgt über das bezogen auf die Fahrtrichtung hintere Dachteil, wobei dieses lagefest zum Rotationslenker angebracht sein kann, oder auch über eine Lenkeranordnung mit dem Rotationslenker verbunden sein kann, wobei als eine solche Lenkeranordnung wiederum bevorzugt eine Viergelenkanordnung Verwendung finden kann, wobei es im Rahmen der Erfindung liegt, bei über eine Lenkeranordnung an der Rotationslenkeranordnung angebrachten hinterem Dachteil auch zwischen diesen Teilen eine in der Stapellage des Daches wirksame Verriegelung vorzusehen.

Weitere Einzelheiten und Merkmale der Erfindung ergeben sich aus den Ansprüchen. Des Weiteren wird die Erfindung nachstehend anhand der Zeichnungen näher erläutert. Es zeigen:
- Fig. 1: eine isolierte Darstellung eines dreiteiligen, in seiner Schließstellung eine im wesentlichen plane Dachebene aufweisenden Daches, dessen aufeinander folgende Dachteile jeweils über Lenkerkinematiken zueinander verstellbar aufeinander abgestützt sind und das über eine dem hinteren Dachteil zugeordnete Rotationslenkanordnung zur nicht weiter dargestellten Karosserie des Fahrzeuges verstellbar ist, die einen das Dach in seiner Schließstellung aufnehmenden Ausschnitt aufweist,
- Fig. 2: das Dach gemäß Fig. 1 in einer Zwischenstellung bei der Überführung aus einer geschlossenen Stellung gemäß Fig. 1 in eine Offenstellung, wobei die Abstützung der Dachteile untereinander über Lenkerkinematiken sowie die Verbindung des Daches zur Rotationslenkeranordnung gezeigt ist,
- Fig. 3: das Dach gemäß Figuren 1 und 2 in einer Übergangsstellung zu einer Ablagestellung gemäß Fig. 4, wobei in Fig. 3 die Dachteile zu einem auf Dachhöhe liegenden Dachteilstapel zusammengefahren sind,
- Fig. 4: das Dach in seiner Ablagestellung nach Verschwenken des Dachteilstapels in eine Überkopflage, und
- Fig. 5 und 6: die den Dachteilen zugeordnete Verriegelung, über die die Dachteile in ihrer Stapellage zueinander festgelegt sind, wobei Fig. 5 die Verriegelung in ihrer noch offenen Stellung und Fig. 6 in ihrer Verriegelungsstellung zeigt.

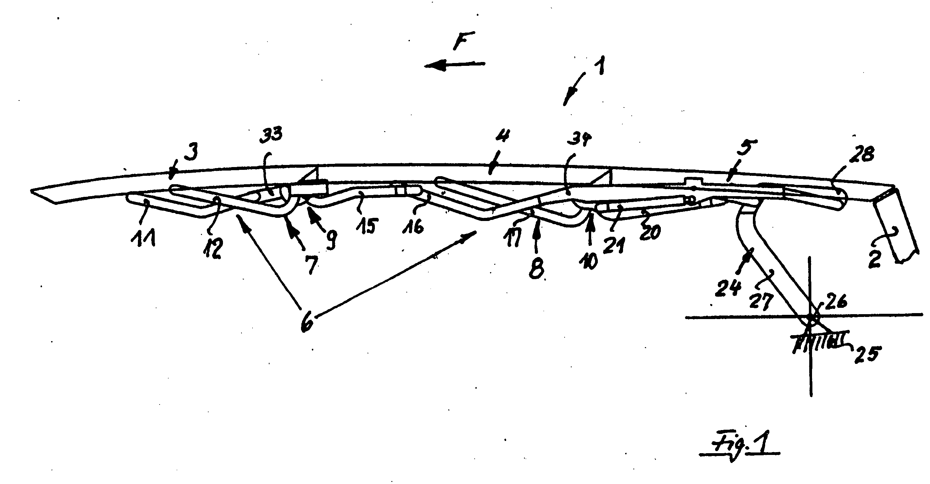

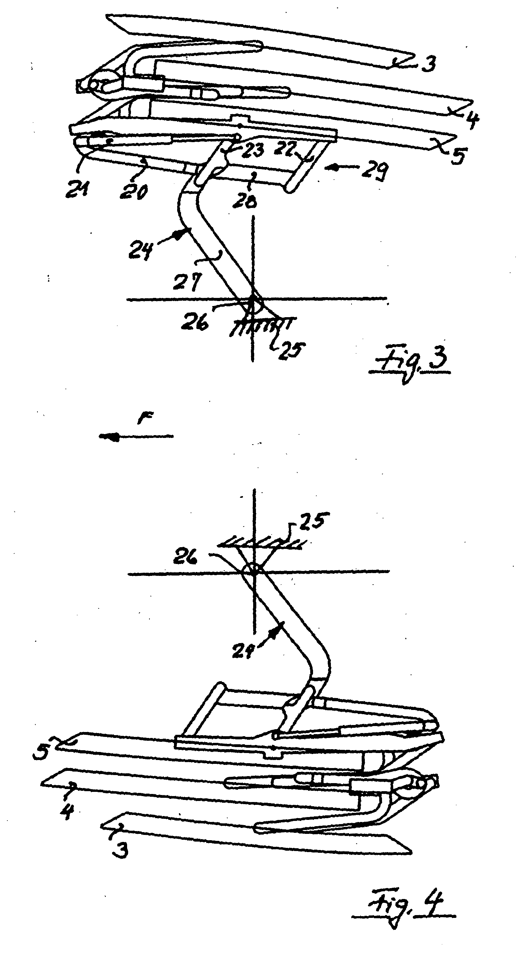

In den Figuren ist ein in Annäherung planes Dach 1 eines Fahrzeuges mit offenem Aufbau gezeigt, das als Steilheckfahrzeug einen gegen das Heck offenen Dachausschnitt aufweist, zu dem ein heckseitiger, über eine Heckklappe oder eine Hecktür verschließbarer Karosserieausschnitt korrespondiert. Die Heckklappe, oder Hecktür, in Fig. 1 mit 2 bezeichnet und lediglich angedeutet, schließt rückseitig an das Dach 1 an, das als mehrteiliges Dach im Ausführungsbeispiel formsteife Dachteile 3 bis 5 aufweist, die in der Schließlage des Daches (Fig. 1) aneinander anschließen und die in eine Öffnungslage verstellbar sind (Fig. 3), in der sie geschichtet übereinander liegen, wobei das mittlere Dachteil 4 über dem hinteren Dachteil 5 und das vordere Dachteil 3 über dem mittleren Dachteil 4 liegt. Die Dachteile 3 bis 5 sind über eine Lenkerkinematik 6 verbunden, die zur Abstützung aufeinander folgender Dachteile 3, 4 bzw. 4, 5 jeweils eine Lenkeranordnung 7 bzw. 8 aufweist. Die Lenkeranordnung 7 zwischen dem vorderen Dachteil 3 und dem mittleren Dachteil 4 ist ebenso wie die Lenkeranordnung 8 zwischen dem mittleren Dachteil 4 und dem hinteren Dachteil 5 jeweils durch eine Viergelenkkinematik gebildet, und in der Antriebsverbindung zur Lenkeranordnung 7 bzw. zur Lenkeranordnung 8 liegt jeweils ein Fünfgelenk 9 bzw. 10, mittels dessen es möglich ist, die bei geschlossenem Dach 1 in Strecklage aneinander anschließenden Dachteile 3 bis 5 in eine Öffnungslage zu überführen, in der diese zu einem Paket übereinander geschichtet, dicht gepackt, also mit geringem Abstand übereinander liegen.

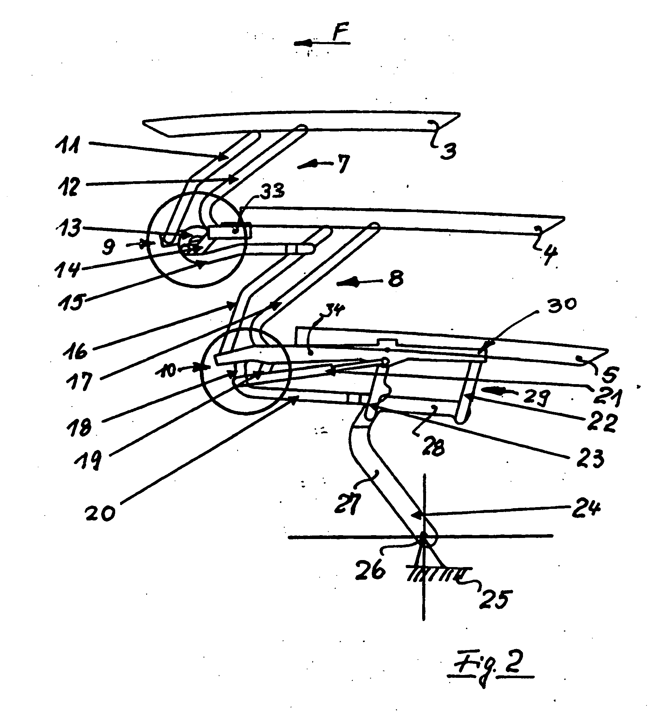

Wie Fig. 2 zeigt, umfasst die Lenkeranordnung 7 einen Steuerlenker 11 und einen Hauptlenker 12, und in entsprechender Weise ist die Lenkeranordnung 8 mit einem Steuerlenker 16 und einem Hauptlenker 17 aufgebaut. Im Antrieb der jeweiligen Lenkeranordnung 7 bzw. 8 liegt jeweils das Fünfgelenk 9 bzw. 10, wobei der Antrieb auf den jeweiligen Hauptlenker 12 bzw. 17 erfolgt. Bezogen auf die Lenkeranordnung 7 zwischen vorderem Dachteil 3 und mittlerem Dachteil 4 erfolgt der Antrieb über einen Koppellenker 15, der ausgehend von einer Anlenkung zum Steuerlenker 16 der Lenkeranordnung 8 über das Fünfgelenk 9 mit dem Hauptlenker 12 verbunden ist, wobei das Fünfgelenk 9 einen Pendellenker 13 und einen Zuglenker 14 umfasst. Der in Fahrtrichtung F vor dem Zuglenker 14 liegende Pendellenker 13 ist, was nicht weiter gezeigt ist, einerseits zusammen mit dem Steuerlenker 11 und dem Hauptlenker 12 an einem zum mittleren Dachteil 4 nach vorne auskragenden Ausleger 33 angelenkt, und zum anderen am Koppellenker 15. Der Zuglenker 14 hat zum Koppellenker 15 eine entgegen der Fahrtrichtung F zur Anlenkung des Pendellenkers 13 versetzte Anlenkung, und es ist der Zuglenker 14 des Weiteren an einem Fortsatz des Hauptlenkers 12 angelenkt, der über die Anlenkung des Hauptlenkers 12 am Ausleger 33 auskragt, so dass der Antrieb für die Lenkanordnung 7, wie dargelegt, über ein Fünfgelenk 9 läuft.

In entsprechender Weise ist die Lenkeranordnung 8 über ein Fünfgelenk 10 angetrieben, ausgehend von einem Koppellenker 20, an dem, in analoger Weise wie bezüglich des Fünfgelenkes 9 beschrieben, ein Pendellenker 18 und ein Zuglenker 19 angelenkt sind, von denen der Zuglenker 19 wiederum an einem Fortsatz des Hauptlenkers 17 angreift, der über dessen Anlenkung zum dem hinteren Dachteil 5 zugeordneten Ausleger 34 hinausragt. Das hintere Dachteil 5, das entsprechend der vorgeschilderten Anbindung der Dachteile 3 und 4 über die zugeordneten Lenkeranordnungen 7, 8 diese Dachteile trägt, ist seinerseits über einen Rotationslenker 24 mit der nur schematisch angedeuteten Karosserie 25 des Fahrzeuges verbunden, wobei der Rotationslenker 24 zur Karosserie 25 im Ausführungsbeispiel eine lagefeste Drehachse 26 aufweist. Bezogen auf seine Stellung gemäß Figuren 1 bis 3 - geschlossenes Dach (Fig. 1) und geöffnetes Dach (Fig. 3) - weist der winklig gestaltete Rotationslenker 24 bei geschlossenem Dach einen schräg nach vorne in Fahrtrichtung F ansteigenden Schenkel 27 sowie einem demgegenüber abgeknickten, nach hinten verlaufenden Schenkel 28 auf, der die Tragbasis für eine Lenkeranordnung 29 bildet, über die das hintere Dachteil 5 mit dem Rotationslenker 24 verbunden ist. Die Lenkeranordnung 29 ist wiederum als Viergelenk mit einem Hauptlenker 22 und einem Steuerlenker 23 ausgebildet, die jeweils Anlenkpunkte zum Schenkel 28 des Rotationslenkers 24 und zum hinteren Dachteil 5, bzw. einem Traggerüst 30 des hinteren Dachteiles 5 aufweisen, das in Fahrtrichtung F, also nach vorne, in dem Ausleger 34 ausläuft, an dem der Steuerlenker 16 und der Hauptlenker 17 der Lenkeranordnung 8 angelenkt sind, so dass durch Ein- und Ausfahren des als Stellantrieb dienenden Antriebszylinders 21 die Verstellung der Dachteile 3 bis 5 gegenüber dem Rotationslenker 24 erfolgt.

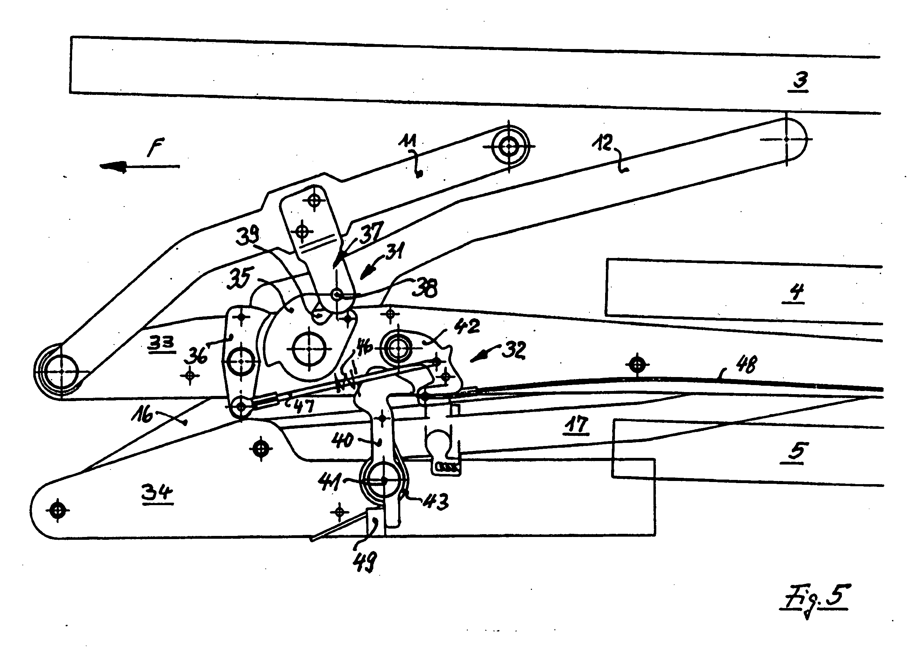

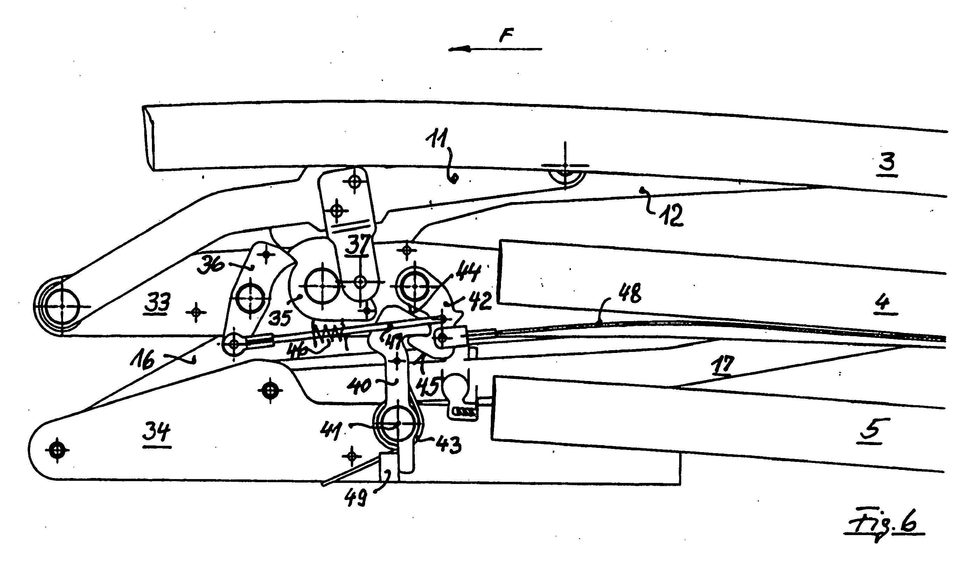

Die Dachteile 3 bis 5 sind mit den zwischen den Dachteilen 3 und 4 sowie 4 und 5 schematisch angedeuteten Lenkeranordnungen 7 und 8 in der zusammengefahrenen Stapellage in Fig. 6 sowie in einer der Stapellage bereits angenäherten Öffnungslage in Fig. 5 gezeigt. Figuren 5 und 6 zeigen darüber hinaus auch die zwischen den Dachteilen 3 und 4 bzw. 4 und 5 zu deren wechselseitiger Verriegelung vorgesehene Verriegelungsvorrichtungen 31 und 32, von denen die Verriegelungsvorrichtung 31 zwischen den Dachteilen 3 und 4 als erste Verriegelungsvorrichtung und die Verriegelungsvorrichtung 32 zwischen den Dachteilen 4 und 5 als zweite Verriegelungsvorrichtung bezeichnet ist. Die zwischen den Dachteilen liegenden Lenkeranordnungen 7 bzw. 8 sind durch die Steuerlenker 11 und 16 sowie die Hauptlenker 12 und 17 veranschaulicht. Die Anlenkung der Lenker 11 und 12 bzw. 16 und 17 am Dachteil 4 bzw. am Dachteil 5 erfolgt jeweils an einem in Fahrtrichtung F, das heißt also nach vorne auskragenden Ausleger 33 bzw. 34. Die erste Verriegelungsvorrichtung 31 umfasst am Ausleger 33 des Dachteiles 4 eine Drehfalle 35 sowie eine Sperrklinke 36. Das Riegelteil 37 in der ersten Verriegelungsvorrichtung 31 ist dem Steuerlenker 11 zugeordnet und läuft gegen das Fangmaul 39 in einem Riegel 38 aus. Die Sperrklinke 36 ist in Richtung auf ihre Sperrlage zur Drehfalle 35 federbelastet, und die Drehfalle 35 in Richtung auf ihre in Fig. 5 dargestellte Öffnungs- und Aufnahmelage für den Riegel 38.

Die zweite Verriegelungsvorrichtung 32 umfasst einen Rasthaken 40, der um eine Achse 41 drehbar am Ausleger 34 festgelegt ist und der in Richtung seiner Rastlage gegenüber einem Verriegelungshaken 42 über eine Feder 43 belastet ist, bei Bewegungsbegrenzung in Gegenrichtung über einen Anschlag 49. Am Ausleger 33 des mittleren Dachteiles 4 ist der Verriegelungshaken 42 gelagert und in Richtung auf seine Rastlage zum Rasthaken 40 federbelastet, wobei der Rasthaken 40 und der Verriegelungshaken 42 gegensinnig angestellte Rückenflächen 44, 45 aufweisen, die gegebenenfalls Führungs- und Abdrängflächen bilden.

Beim Zusammenfahren der Dachteile 1 bis 5 in ihre Stapellage gemäß Fig. 3 kommen die Dachteile 3 bis 5 zunächst in eine der Verriegelungslage angenäherte Lage gemäß Fig. 5, in der die Sperrklinke 36 und der Verriegelungshaken 42 gemäß Fig. 5 noch in einer Außereingriffslage zur Drehfalle 35 bzw. zum Rasthaken 40 liegen und der Riegel 38 dem Fangmaul 39 noch vorgelagert ist. Werden die Dachteile 3 bis 5 aus dieser in Fig. 5 gezeigten Lage weiter zu einem Dachteilpaket zusammengefahren und in die verriegelte Paketlage gemäß Fig. 6 überführt, so taucht einerseits zunächst der Riegel 38 in das Fangmaul 39 ein und verschwenkt die Drehfalle 35, bis die Sperrklinke 36 in eine Eingriffsstellung zur Drehfalle 35 gemäß Fig. 6 kommt. In Richtung auf diese Eingriffslage ist die Sperrklinke 36, wie über eine Feder 46 veranschaulicht, federbelastet. Die Sperrklinke 36 ist mit dem Verriegelungshaken 42 über eine Stellstange 47 verbunden, und beim Einfallen der Sperrklinke 36 in die Drehfalle 35 kommt der Verriegelungshaken 42 in eine Eingriffsstellung zum Rasthaken 40. Die dadurch gegebene Verriegelungsstellung für das Dachteilpaket kann über die angedeutete Zugmittelverbindung 48 wieder gelöst werden, wobei beim Angriff einer Zugkraft der Verriegelungshaken 42 und die Sperrklinke 36 wieder in eine Freigangsstellung gemäß Fig. 5 kommen, wodurch die Dachteile in Schließrichtung des Daches gegeneinander verstellt werden können.

In der in Fig. 6 gezeigten Verriegelungsstellung der Dachteile können diese als Dachteilpaket gemäß Fig. 3 unter Beibehalt ihrer Lage zueinander um die Drehachse 26 in die Überkopflage gemäß Fig. 4 verschwenkt werden, die einer Ablagestellung des Daches 1 entspricht, in der das Dach 1 bevorzugt im hinteren unteren Bodenbereich des Fahrzeuges abgelegt ist.

## Patentansprüche

1. Dach für Fahrzeuge mit offenem Aufbau und mehreren formsteifen Dachteilen (2 bis 5), die in Schließstellung des Daches (1) in der Dachebene aneinander anschließend eine Überdeckung zum Fahrzeuginnenraum bilden, wobei die über eine Lenkerkinematik (6) verbundenen Dachteile (2 bis 5) in eine Überdeckungslage zueinander verstellt eine Offenstellung einnehmen, über den Dachteilen (2 bis 5) zugeordnete Verriegelungsteile von Verriegelungsvorrichtungen (31, 32) gegeneinander verriegelbar und in ihrer Offenstellung über die Verriegelungsvorrichtungen (31, 32) in Stapelrichtung gegeneinander festgelegt sind,
**dadurch gekennzeichnet,**
**dass** die Dachteile (3 bis 5), bei der Öffnung des Daches (1) entgegen der Fahrtrichtung (F) zu einem auf Dachhöhe liegenden, heckseitig zum Fahrzeug überlagerten und nach oben aufbauenden Stapel zusammengefahren, derart geschichtet sind, dass ein in der Schließstellung bezogen auf die Fahrtrichtung (F) jeweils vorderes Dachteil (3 bzw. 4) über dem entgegen der Fahrtrichtung (F) anschließenden Dachteil (4 bzw. 5) liegt, wobei die zwischen aufeinander folgenden Dachteilen (3, 4 bzw. 4, 5) vorgesehenen und den Dachteilen (3 bis 5) zugeordneten Verriegelungsteile die in der Schließlage des Daches (1) aufeinander folgenden und in der Offenstellung des Daches (1) übereinander liegenden Dachteile (3 bis 5) in deren jeweils vorderem Endbereich verbinden.

2. Dach nach Anspruch 1,
**dadurch gekennzeichnet,**
**dass** die Dachteile (3 bis 5) als flächig ebene, im Wesentlichen plane Dachteile ausgebildet sind.

3. Dach nach Anspruch 1 oder 2,
**dadurch gekennzeichnet,**
**dass** das Dach (1) drei Dachteile (3 bis 5) aufweist.

4. Dach nach einem der Ansprüche 1 bis 3,
**dadurch gekennzeichnet,**
**dass** die in der Schließstellung des Daches (1) aneinander anschließenden Dachteile (3, 4 bzw. 4, 5) jeweils über durch Viergelenke gebildete Lenkeranordnungen (7, 8) verbunden sind.

5. Dach nach einem der Ansprüche 1 bis 4,
**dadurch gekennzeichnet,**
**dass**, bezogen auf die in der Offenstellung des Daches gegebene Stapellage, die den Dachteilen (2 bis 5) zugeordneten Verriegelungsteile der Verriegelungsvorrichtung (31, 32) im Bereich der im vorderen Endbereich der Dachteile (3 bis 5) vorgesehenen Anlenkungen der Lenkeranordnungen (6, 7) an nach vorne auskragenden Auslegern (33, 34) des mittleren Dachteiles (4) und des hinteren Dachteiles (5) vorgesehen sind und übereinander liegen.

6. Dach nach einem der vorhergehenden Ansprüche,
**dadurch gekennzeichnet,**
**dass** eine zwischen zwei Dachteilen (3, 4) vorgesehene erste Verriegelungsvorrichtung (31) seitens des einen der Dachteile (Dachteil 4) durch eine Drehfalle (35) und seitens des anderen der Dachteile (Dachteil 3) durch ein Riegelteil (37) gebildet ist, über das die Drehfalle (35) beim Einschwenken der Dachteile (3 bis 5) in ihre Stapellage in ihre Sperrstellung verstellbar ist.

7. Dach nach Anspruch 6
**dadurch gekennzeichnet,**
**dass** der Drehfalle (35) eine an dem gleichen Dachteil (4) vorgesehene Sperrklinke (36) zugeordnet ist.

8. Dach nach Anspruch 6 oder 7,
**dadurch gekennzeichnet,**
**dass** die erste Verriegelungsvorrichtung (31) zwischen dem bezogen auf die Schließstellung des dreiteiligen Daches (1) in Fahrtrichtung vorderen Dachteil (3) und dem auf dieses folgenden mittleren Dachteil (4) angeordnet ist.

9. Dach nach einem der Ansprüche 6 bis 8,
**dadurch gekennzeichnet,**
**dass** eine zwischen zwei Dachteilen (4, 5) vorgesehene zweite Verriegelungsvorrichtung (32) seitens des einen der Dachteile (Dachteil 5) durch einen Rasthaken (40) seitens des anderen der Dachteile (Dachteil 4) durch einen Verriegelungshaken (42) gebildet ist.

10. Dach nach Anspruch 9,
**dadurch gekennzeichnet,**
**dass** der Rasthaken (40) und der Verriegelungshaken (42) auf ihre Eingriffsstellung federbelastet und über wechselseitige Abdrängflächen (44, 45) beim Zusammenfahren gegen die Federkraft in eine Zugriffsstellung verstellbar sind.

11. Dach nach einem der Ansprüche 6 bis 10,
**dadurch gekennzeichnet,**
**dass** dem in Schließ- und Stapellage mittleren Dachteil (4) des dreiteiligen Daches von der ersten Verriegelungsvorrichtung (31) Drehfalle (35) und Sperrklinke (36) und von der zweiten Verriegelungsvorrichtung (32) der Verriegelungshaken (42) zugeordnet ist.

12. Dach nach Anspruch 11,
**dadurch gekennzeichnet,**
**dass** die Sperrklinke (36) der ersten Verriegelungsvorrichtung (31) und der Verriegelungshaken (42) der zweiten Verriegelungsvorrichtung (32) in Richtung auf ihre Eingriffslage, sowie entgegengesetzt, jeweils gleiche Drehrichtung aufweisen und über eine gemeinsame Stelleinrichtung verstellbar sind.

13. Dach nach Anspruch 12,
**dadurch gekennzeichnet,**
**dass** die Stelleinrichtung eine die Sperrklinke (36) und den Verriegelungshaken (42) verbindende Stellstange (47) aufweist und zumindest in Richtung auf ihre Freigabestellung über die Stelleinrichtung verstellbar sind.

14. Dach nach einem der vorhergehenden Ansprüche,
**dadurch gekennzeichnet,**
**dass** das Dach (1) mit den in der Öffnungslage des Daches (1) übereinander gestapelten Dachteilen (3 bis 5) über eine Rotationslenkeranordnung (Rotationslenker 24) mit der Karosserie (25) des Fahrzeuges verbunden und bei in der Stapellage befindlichen Dachteilen (3 bis 5) in eine Ablagestellung verschwenkbar ist, in der der Dachteilstapel eine Überkopflage einnimmt.

15. Dach nach Anspruch 14,
**dadurch gekennzeichnet,**
**dass** die Verbindung des Daches (1) zur Rotationslenkeranordnung (Rotationslenker 25) über das hintere, in der zusammengefahrenen Stapellage untere Dachteil (5) erfolgt.

16. Dach nach Anspruch 15,
**dadurch gekennzeichnet,**
**dass** die Rotationslenkeranordnung (Rotationslenker 25) lagefest mit dem hinteren Dachteil (5) verbunden ist.

17. Dach nach Anspruch 16,
**dadurch gekennzeichnet,**
**dass** die Rotationslenkeranordnung (Rotationslenker 25) mit dem hinteren Dachteil (5) über eine Lenkerkinematik (Lenkeranordnung 29) aneinander angeschlossen sind.

18. Dach nach Anspruch 17,
**dadurch gekennzeichnet,**
**dass** die die Rotationslenkeranordnung (Rotationslenker 25) mit dem hinteren Dachteil (5) verbindende Lenkerkinematik (Lenkeranordnung 29) durch eine Viergelenkverbindung gebildet ist.

## Claims

1. Roof for vehicles having an open body and a plurality of dimensionally stable roof parts (2 to 5) which, in the closed position of the roof (1), adjoin one another in the roof plane and form a covering over the vehicle interior space, with the roof parts (2 to 5) which are connected by means of a kinematic link mechanism (6) assuming an open position when adjusted into an overlapping position with respect to one another, with it being possible for said roof parts (2 to 5) to be locked with respect to one another by means of locking parts, which are assigned to the roof parts 2 to 5), of locking devices (31, 32), and with the roof parts (2 to 5), in their open position, being fixed with respect to one another in a stacking direction by means of the locking devices (31, 32),
**characterized**
**in that** the roof parts (3 to 5), retracted during the opening of the roof (1) counter to the direction of travel (F) to form a stack which is situated at the roof level, is superposed on the rear side of the vehicle and has an upwardly extending structure, are layered in such a way that a roof part (3 or 4) which is situated in each case at the front in relation to the direction of travel (F) in the closed position lies above the roof part (4 or 5) which adjoins it counter to the direction of travel (F), with the locking parts which are provided between successive roof parts (3, 4 or 4, 5) and which are assigned to the roof parts (3 to 5) connecting the roof parts (3 to 5) which are arranged in succession in the closed position of the roof (1), and which are situated one above the other in the open position of the roof (1), in their in each case front end region.

2. Roof according to Claim 1,
**characterized**
**in that** the roof parts (3 to 5) are formed as areally flat, substantially planar roof parts.

3. Roof according to Claim 1 or 2,
**characterized**
**in that** the roof (1) has three roof parts (3 to 5).

4. Roof according to one of Claims 1 to 3,
**characterized**
**in that** the roof parts (3, 4 or 4, 5) which adjoin one another in the closed position of the roof (1) are connected in each case by means of link arrangements (7, 8) formed by four-bar mechanisms.

5. Roof according to one of Claims 1 to 4,
**characterized**
**in that**, in relation to the stacked position provided in the open position of the roof, the locking parts, which are assigned to the roof parts (2 to 5), of the locking device (31, 32) are provided in the region of the articulated connections, provided in the front end region of the roof parts (3 to 5), of the link arrangements (6, 7) to forwardly projecting extensions (33, 34) of the middle roof part (4) and of the rear roof part (5), and lie one above the other.

6. Roof according to one of the preceding claims,
**characterized**
**in that** a first locking device (31) which is provided between two roof parts (3, 4) is formed on one of the roof parts (roof part 4) by a rotary catch (35) and on the other of the roof parts (roof part 3) by a bar part (37) by means of which the rotary catch (35) can be adjusted into its blocking position during the pivoting of the roof parts (3 to 5) into their stacked position.

7. Roof according to Claim 6,
**characterized**
**in that** the rotary catch (35) is assigned a pawl (36) which is provided on the same roof part (4).

8. Roof according to Claim 6 or 7,
**characterized**
**in that** the first locking device (31) is arranged between that roof part (3) which is situated at the front in the direction of travel in relation to the closed position of the three-part roof (1) and the middle roof part (4) which follows said front roof part (3).

9. Roof according to one of Claims 6 to 8,
**characterized**
**in that** a second locking device (32) which is provided between two roof parts (4, 5) is formed on one of the roof parts (roof part 5) by a latching hook (40) and on the other of the roof parts (roof part 4) by a locking hook (42).

10. Roof according to Claim 9,
**characterized**
**in that** the latching hook (40) and the locking hook (42) are spring-loaded into their engagement position and, during the retraction, can be adjusted counter to the spring force into an access position by means of respective deflection surfaces (44, 45).

11. Roof according to one of Claims 6 to 10,
**characterized**
**in that** that roof part (4) of the three-part roof which is in the middle in the closed and stacked positions is assigned the rotary catch (35) and pawl (36) of the first locking device (31) and the locking hook (42) of the second locking device (32).

12. Roof according to Claim 11,
**characterized**
**in that** the pawl (36) of the first locking device (31) and the locking hook (42) of the second locking device (32) have in each case the same rotational direction, and can be adjusted by means of a common actuating device, in the direction of their engagement position and in the opposite direction.

13. Roof according to Claim 12,
**characterized**
**in that** the actuating device has an actuating rod (47) which connects the pawl (36) and the locking hook (42), and can be adjusted at least in the direction of their release position by means of the actuating device.

14. Roof according to one of the preceding claims,
**characterized**
**in that** the roof (1) with the roof parts (3 to 5) stacked one above the other in the opening position of the roof (1) is connected to the body (25) of the vehicle via a rotary link arrangement (rotary link 24) and, when the roof parts (3 to 5) are situated in the stacked position, can be pivoted into a stowage position in which the roof part stack assumes an upside-down position.

15. Roof according to Claim 14,
**characterized**
**in that** the connection of the roof (1) to the rotary link arrangement (rotary link 25) takes place by means of the rear roof part (5) which is the lower roof part in the retracted stacked position.

16. Roof according to Claim 15,
**characterized**
**in that** the rotary link arrangement (rotary link 25) is connected in a positionally fixed manner to the rear roof part (5).

17. Roof according to Claim 16,
**characterized**
**in that** the rotary link arrangement (rotary link 25) and the rear roof part (5) are connected to one another by means of a kinematic link mechanism (link arrangement 29).

18. Roof according to Claim 17,
**characterized**
**in that** the kinematic link mechanism (link arrangement 29) which connects the rotary link arrangement (rotary link 25) to the rear roof part (5) is formed by a four-bar mechanism connection.

## Revendications

1. Toit pour véhicules comprenant une structure ouverte et plusieurs parties de toit de forme rigide (2 à 5), qui forment dans la position de fermeture du toit (1) un recouvrement vers l'habitacle du véhicule en se raccordant les unes aux autres dans le plan du toit, les parties de toit (2 à 5) connectées par le biais d'une cinématique à bras oscillants (6), déplacées les unes par rapport aux autres dans une position de recouvrement, adoptant une position d'ouverture, pouvant être verrouillées par le biais de pièces de verrouillage de dispositifs de verrouillage (31, 32) associées aux parties de toit (2 à 5) et étant fixées les unes contre les autres dans leur position d'ouverture par le biais des dispositifs de verrouillage (31, 32) dans la direction d'empilement,
**caractérisé en ce que**
les parties de toit (3 à 5), déplacées ensemble lors de l'ouverture du toit (1) à l'encontre de la direction de conduite (F) pour former une pile s'établissant vers le haut et superposée du côté arrière du véhicule, se trouvant à la hauteur du toit, sont stratifiées de telle sorte qu'une partie de toit avant (3, respectivement 4), par rapport à la direction de conduite (F) dans la position de fermeture se situe à chaque fois pardessus la partie de toit (4, respectivement 5) s'y raccordant, à l'encontre de la direction de conduite (F), les parties de verrouillage prévues entre les parties de toit successives (3, 4, respectivement 4, 5) et associées aux parties de toit (3 à 5) reliant, dans leurs régions d'extrémité avant respectives, les parties de toit (3 à 5) se suivant dans la position de fermeture du toit (1) et superposées dans la position d'ouverture du toit (1).

2. Toit selon la revendication 1,
**caractérisé en ce que**
les parties de toit (3 à 5) sont réalisées sous forme de parties de toit de surfaces plates, essentiellement planes.

3. Toit selon la revendication 1 ou 2,
**caractérisé en ce que**
le toit (1) présente trois parties de toit (3 à 5).

4. Toit selon l'une quelconque des revendications 1 à 3,
**caractérisé en ce que**
les parties de toit (3, 4, respectivement 4, 5) se raccordant les unes aux autres dans la position de fermeture du toit (1) sont à chaque fois connectées par le biais d'agencements de bras oscillants (7, 8) formés par des quadrilatères articulés.

5. Toit selon l'une quelconque des revendications 1 à 4,
**caractérisé en ce que**
par rapport à la position empilée se présentant dans la position d'ouverture du toit, les parties de verrouillage du dispositif de verrouillage (31, 32), associées aux parties de toit (2 à 5), sont prévues dans la région des articulations des agencements de bras oscillants (6, 7) prévues dans la région d'extrémité avant des parties de toit (3 à 5), sur des bras de potence (33, 34) de la partie de toit centrale (4) et de la partie de toit arrière (5) en saillie vers l'avant, et sont superposées.

6. Toit selon l'une quelconque des revendications précédentes,
**caractérisé en ce**
**qu'**un premier dispositif de verrouillage (31) prévu entre deux parties de toit (3, 4) est formé du côté de l'une des parties de toit (partie de toit 4) par un pêne tournant (35) et du côté de l'autre des parties de toit (partie de toit 3) par une partie de verrou (37), par le biais de laquelle le pêne tournant (35), lors du pivotement des parties de toit (3 à 5) dans leur position empilée, peut être déplacé dans sa position de blocage.

7. Toit selon la revendication 6,
**caractérisé en ce que**
le pêne tournant (35) est associé à un cliquet d'arrêt (36) prévu sur la même partie de toit (4).

8. Toit selon la revendication 6 ou 7,
**caractérisé en ce que**
le premier dispositif de verrouillage (31) est disposé entre la partie de toit (3) avant dans la direction de conduite, par rapport à la position de fermeture du toit (1) en trois parties, et la partie de toit centrale (4) qui la suit.

9. Toit selon l'une quelconque des revendications 6 à 8,
**caractérisé en ce**
**qu'**un deuxième dispositif de verrouillage (32) prévu entre deux parties de toit (4, 5) est formé du côté de l'une des parties de toit (partie de toit 5) par un crochet d'encliquetage (40) et du côté de l'autre des parties de toit (partie de toit 4) par un crochet de verrouillage (42).

10. Toit selon la revendication 9,
**caractérisé en ce que**
le crochet d'encliquetage (40) et le crochet de verrouillage (42) sont sollicités par ressort dans leur position d'engagement et peuvent être déplacés par le biais de surfaces d'écartement mutuelles (44, 45) dans une position d'accès lors de leur avance l'un vers l'autre à l'encontre de la force de ressort.

11. Toit selon l'une quelconque des revendications 6 à 10,
**caractérisé en ce que**
l'on associe à la partie de toit centrale (4) dans la position de fermeture et la position empilée du toit en trois parties, le pêne tournant (35) et le cliquet d'arrêt (36) du premier dispositif de verrouillage (31), et le crochet de verrouillage (42) du deuxième dispositif de verrouillage (32).

12. Toit selon la revendication 11,
**caractérisé en ce que**
le cliquet d'arrêt (36) du premier dispositif de verrouillage (31) et le crochet de verrouillage (42) du deuxième dispositif de verrouillage (32) présentent, dans la direction de leur position d'engagement, ainsi que dans la direction opposée, à chaque fois le même sens de rotation, et peuvent être déplacés par le biais d'un dispositif de réglage commun.

13. Toit selon la revendication 12,
**caractérisé en ce que**
le dispositif de réglage présente une tige de commande (47) reliant le cliquet d'arrêt (36) et le crochet de verrouillage (42) et peuvent être déplacées au moins dans la direction de leur position de libération par le biais du dispositif de réglage.

14. Toit selon l'une quelconque des revendications précédentes,
**caractérisé en ce que**
le toit (1) avec les parties de toit (3 à 5) empilées les unes sur les autres dans la position d'ouverture du toit (1) est connecté par le biais d'un agencement à bras rotatif (bras rotatif 24) à la carrosserie (25) du véhicule, et lorsque les parties de toit (3 à 5) se trouvent dans la position empilée, peut être pivoté dans une position de rangement dans laquelle l'empilement des parties de toit adopte une position au-dessus de la tête.

15. Toit selon la revendication 14,
**caractérisé en ce que**
la connexion du toit (1) à l'agencement à bras rotatif (bras rotatif 25) a lieu par le biais de la partie de toit arrière (5), inférieure dans la position empilée rassemblée.

16. Toit selon la revendication 15,
**caractérisé en ce que**
l'agencement à bras rotatif (bras rotatif 25) est connecté de manière fixée en position à la partie de toit arrière (5).

17. Toit selon la revendication 16,
**caractérisé en ce que**
l'agencement à bras rotatif (bras rotatif 25) est raccordé à la partie de toit arrière (5) par le biais d'une cinématique à bras oscillants (agencement de bras oscillants 29).

18. Toit selon la revendication 17,
**caractérisé en ce que**
la cinématique à bras oscillants (agencement à bras oscillant 29) reliant l'agencement à bras rotatif (bras rotatif 25) à la partie de toit arrière (5) est formée par une connexion à quadrilatère articulé.
